**Europäisches Patentamt**

**European Patent Office**

**Office européen des brevets**

(11) Numéro de publication : **0 154 192 B2**

(12) **NOUVEAU FASCICULE DE BREVET EUROPEEN**

(45) Date de publication du nouveau fascicule du brevet : **30.03.94 Bulletin 94/13**

(51) Int. Cl.⁵ : **A23L 2/38,** A23C 11/00, A23C 11/04, A23C 11/08, A23F 5/40, A23G 9/20

(21) Numéro de dépôt : **85101333.4**

(22) Date de dépôt : **08.02.85**

(54) **Procédé de préparation d'une composition pulvérulente pour boisson.**

(30) Priorité : **20.02.84 CH 806/84**

(43) Date de publication de la demande : **11.09.85 Bulletin 85/37**

(45) Mention de la délivrance du brevet : **03.08.88 Bulletin 88/31**

(45) Mention de la décision concernant l'opposition : **30.03.94 Bulletin 94/13**

(84) Etats contractants désignés : **AT BE CH DE FR IT LI LU NL SE**

(56) Documents cités :
**EP-A- 0 026 119**
**DE-A- 2 155 725**
**DE-B- 1 028 869**
**US-A- 4 025 659**

(56) Documents cités :
**US-A- 4 092 438**
**US-A- 4 438 147**
**Encyclopedia of Food Engineering (1971) p. 331-332.**
**"Kindervoeding", 1979, p. 74 et 82**
**"Dairy industries", 1964, p.948, 949**
**Brochures "Melacto 6" et "Melacto 17"**
**"Drying Milk and Milk Products", 1966, p. 89-90 et 172-173**
**"Journal of Dairy Science", 1966, vol 49, p.694**
**"Het verstuivingsdroogproces", 1979, p.98-100**

(73) Titulaire : **SOCIETE DES PRODUITS NESTLE S.A.**
**Case postale 353**
**CH-1800 Vevey (CH)**

(72) Inventeur : **Kuypers, Theo Walter**
**Huebeliweg 291**
**CH-3078 Richigen (CH)**

EP 0 154 192 B2

Jouve, 18, rue Saint-Denis, 75001 PARIS

**Description**

La présente invention concerne un procédé de préparation d'une composition pour boisson sous forme pulvérulente, destinée à être mélangée avec un liquide pour préparer une boisson moussante, par exemple avec de l'eau chaude et du café soluble ou avec du café liquide chaud pour obtenir un genre de "cappuccino", ou avec une boisson cacaotée.

Il existe des produits pulvérulents pour le blanchiment du café, depuis le lait en poudre jusqu'aux produits ne contenant que peu ou pas de matières grasses et/ou de protéines lactiques.

Le brevet des Etats-Unis No. 4.438.147 en particulier décrit le procédé de fabrication d'une composition pulvérulente comprenant une matière grasse non lactique, un hydrate de carbone non lactique et un stabilisateur de la mousse contenant des protéines tel que le caséinate de sodium.

Suivant "Encyclopedia of food engineering", 1971, p. 331-332, il est connu de préparer des produits laitiers pulvérulents, par exemple à partir du lait entier par préchauffage, concentration et séchage par pulvérisation en injectant un gaz inerte lors de la pulvérisation.

La demande de brevet DE-B-1.028.869 concerne un procédé de préparation d'une crème à café ou à thé sous forme de tablette compacte qui consiste à ajouter à une poudre de crème des protéines lactiques et du lactose en poudre et à compacter le mélange.

L'invention se propose de préparer par pulvérisation à partir d'un mélange liquide, une composition pulvérulente pour boisson moussante qui ait les qualités requises de solubilité et d'absence de floculation des protéines en présence d'un liquide chaud faiblement acide tel qu'un extrait de café ou de succédané de café. Les propriétés de solubilité et de non floculation sont obtenues par un choix judicieux des proportions entre les protéines et le lactose et la présence d'un sel de stabilisation.

Selon l'invention, la propriété de la poudre de mousser en présence d'un liquide chaud faiblement acide est maintenue malgré le séchage par pulvérisation.

L'invention concerne donc un procédé de préparation d'une composition pulvérulente pour boisson moussante du type "cappucino" avec obtention d'une couche de mousse stable à la reconstitution avec de l'eau chaude comprenant essentiellement des matières grasses, des protéines, du lactose et autres hydrates de carbone, dans lequel les matières grasses, les protéines, le lactose et les autres composants en suspension ou en solution sont préchauffés, chauffés, concentrés par évaporation à un taux de matières solides de 46 à 60%, séchés par atomisation puis post-séchés, les différents composants sont présents dans des proportions telles que le rapport pondéral protéines/lactose dans la composition sèche soit compris entre 1/3 et 1/5 et la composition contient 0,3 à 1% d'un sel de stabilisation en poids des matières sèches, dans lequel on introduit un gaz inerte sous faible pression dans le concentrat, on mélange le gaz et le concentrat, on comprime fortement le concentrat gazéifié et on l'injecte dans une tour de séchage par l'intermédiaire d'une buse où on le sèche par pulvérisation dans un courant d'air chaud formé d'une pluralité de petits courants tourbillonnants.

A titre de comparaison, le rapport pondéral protéines/lactose est d'environ 1/1,4 pour le lait de vache.

Les expériences faites ont montré que du point de vue de la stabilité à la chaleur, il n'y avait pas intérêt à s'écarter trop de 1/4 pour le rapport protéines/lactose des compositions lactiques, tandis que les compositions non entièrement lactiques sont moins sensibles à la chaleur.

Pour mettre en oeuvre le procédé selon l'invention, sous réserve de l'obtention du raport caractéristique protéines/lactose de 1/3,5 à 1/5 dans le produit pulvérulent, on ajoute à une solution de protéines (lait, caséinate) un sel de stabilisation et suivant le cas du lactose, du petit-lait doux (provenant de la coagulation de la caséine par la présure), des matières grasses lactiques et/ou végétales, un hydrate de carbone tel que du sucrose, du sirop d'amidon, le cas échéant des substances aromatisantes.

Le sel de stabilisation constitue en solution aqueuse un tampon neutralisant la faible acidité du café lors de la dissolution du produit dans un milieu aqueux, ce qui contribue à empêcher la floculation des protéines. Ce peut être par exemple un citrate ou un phosphate, de préférence l'hydrogénophosphate de sodium ($Na_2HPO_4$), qu'on ajoute en solution aqueuse, par exemple à raison de 0,6 à 1 % en poids des matières sèches lorsqu'il s'agit d'un citrate ou de préférence à raison de 0,3 à 0,5 % en poids des matières sèches pour l'hydrogénophosphate de sodium.

La composition aqueuse ainsi obtenue, qui présente un taux de matières solides de 16 à 20 % en poids, est préchauffée puis chauffée dans un échangeur de chaleur à plaques ou par injection de vapeur avec un temps d'attente, et concentrée par évaporation à un taux de matières solides de 46 à 60 %. Cette concentration peut être suivie d'un nouveau chauffage avec temps d'attente.

Le concentrat est finalement séché par atomisation dans une tour et post-séché en lit fluidisé, par exemple, dans des conditions permettant de préparer une boisson moussante. Pour ce faire, on injecte un gaz de préférence inerte tel que de l'azote dans le concentrat avant de sécher celui-ci par atomisation, ce qui produira de petites cavités dans les particules.

Le gaz est injecté sous une faible pression, par exemple de 3-4 bar, dans le concentrat, de préférence directement en amont d'une pompe mélangeuse et le mélange concentrat/gaz sera repris par une pompe à haute pression, de préférence disposée à proximité de la pompe mélangeuse, laquelle pompe à haute pression refoulera le concentrat gazéifié, de préférence à une pression de 40-80 bar dans la buse de la tour d'atomisation.

Pour éviter l'éclatement prématuré des petites cavités produites dans les particuliers lors de la phase initiale du séchage, il y a lieu de veiller à ce que le courant d'air chaud dans la tour de séchage ne soit pas trop violent. De préférence, le courant d'air chaud sera cassé à la manière d'un brise-jet par un dispositif approprié, par exemple un tamis ou une grille disposé à la sortie de la tuyère d'amenée d'air en haut de la tour de séchage, de sorte que la pression d'air diminue environ de moitié au niveau de la buse d'atomisation du concentrat, le courant d'air violent primaire étant alors transformé en une pluralité de petits courants tourbillonnants secondaires.

En raison des risques de coagulation, il est difficile de sécher ensemble par atomisation des protéines lactiques et du café. Pour obtenir leur mélange sous forme pulvérulente, il faut soit neutraliser l'acide du café liquide avant mélange avec le lait et séchage, soit mélanger le lait et le café tous deux sous forme pulvérulente. Les mêmes précautions qu'avec le lait doivent être prises avec la composition préparée selon l'invention. Si l'on désire préparer industriellement une composition mixte avec du café, on prendra de préférence du café instantané en poudre ou aggloméré pour le mélanger à la composition pulvérulente en l'introduisant dans la tour de séchage. Selon un procédé préféré, le café instantané sera introduit par la conduite qui ramène dans la tour les particules fines récupérées par les cyclones par exemple. La proportion pondérale de café instantané sera de préférence de 18 à 30% du total. En cas de mélange des composants sous forme pulvérulente, il peut y avoir intérêt à teinter la composition avec du café par exemple, afin de donner au mélange pulvérulent une teinte plus homogène.

La composition pulvérulente préparée selon l'invention aura de préférence un poids spécifique de l'ordre de 300 grammes par litre, de sorte que trois cuillères de 3 grammes chacune conviennent pour la préparation d'une tasse de boisson de 140 ml. On peut y ajouter une cuillère de café instantané pour obtenir une tasse de café clair, du genre dit « café crème » ou « café au lait » suivant le cas. Si la composition pulvérulente préparée selon l'invention présente de petites cavités, l'addition de café instantané et le cas échéant d'une petite quantité de cacao donnera une boisson du type « cappuccino », avec une couche de mousse de 8 à 15 millimètres qui maintiendra la chaleur et produira en bouche une sensation crémeuse.

Dans les exemples suivants les pourcentages sont pondéraux.

Exemple 1

(Composition lactique)

Pour obtenir 100 kg de produit fini, on prend 460 kg de lait standardisé contenant 17,3 kg de graisse lactique et 40,28 kg de solides non gras. On y mélange 0,4 kg de $Na_2HPO_4$ en solution aqueuse à 10%. On y ajoute 39,7 kg de lactose dissous dans 150 kg d'eau tiède. Le tout est préchauffé à 80°C dans un échangeur de chaleur à plaques, puis chauffé à 115°C par injection de vapeur pendant 5 secondes et concentré par évaporation à un taux de matières solides de 51%. Aprés un temps d'attente d'environ 10 minutes à 43°C, le concentrat est rechauffé à 75°C par injection de vapeur, puis attend environ 5 minutes. Le débit de concentrat à 50% de matières solides est de 670 litres/heure. On y injecte 4 litres/minute d'azote à environ 3 bar, puis une pompe refoule le concentrat à 68 bar dans la buse d'une tour de séchage où il est séché par atomisation avec de l'air à 330°C sous une pression de 15,7 kPa (1600 mm d'eau) à l'entrée, le jet d'air primaire étant cassé en petits courants tourbillonnants secondaires de pression environ 7,9 kPa (800 mm d'eau) par un tamis au niveau de la buse d'atomisation du concentrat.

Par la conduite qui ramène dans la tour les particules fines récupérées par les cyclones, on injecte 112 kg/heure de café soluble aggloméré, puis l'ensemble issu de la tour est séché en lit fluidisé.

La composition analytique de la composition pulvérulente selon l'invention, à l'exclusion du café soluble, est la suivante:

|  | % en poids |
|---|---|
| Graisse lactique | 17,3 |
| Protéines | 15,3 |
| Lactose | 61,2 |
| Matières minérales | 3,7 |
| Humidité | 2,5 |

Le rapport protéines/lactose est de 1/4.

Exemple 2

(Composition à base de lait écrémé)

Pour obtenir 100 kg de produit fini, on prend 451,5 kg de lait écrémé contenant 0,4 kg de graisse lactique et 40,2 kg de solides non gras. On y mélange 0,4 kg de $Na_2HPO_4$ en solution aqueuse à 10%, puis 39,7 kg de lactose dissous dans 150 kg d'eau tiède. Le mélange est alors préchauffé à 80°C et on y injecte en continu 16,9 kg de graisse de coco. Le reste des opérations se déroule comme dans l'exemple 1 (chauffage à 115°C par injection de vapeur pendant 5 secondes, concentration, etc.). La composition analytique est la même que celle de l'exemple 1 sauf que la graisse de coco remplace la graisse lactique pour 16,9% du mélange.

Exemple 3

(Composition non lactique)

Pour 100 kg de produit fini, on ajoute à 50 kg d'eau à 50°C, 0,4 kg de $Na_2HPO_4$ en solution aqueuse à 10%, puis 12,8 kg de caséinate de sodium en poudre, 47,1 kg de lactose en poudre et 10,0 kg de sucrose, on passe le mélange au moulin colloïdal et on ajoute encore 30 kg d'eau à 60°C, Après préchauffage à 70°C, on injecte en continu 27,5 kg de graisse de coco et on chauffe à 115°C par injection de vapeur pendant 5 secondes, puis on procède à une expansion suivie d'une homogénéisation en deux étages (200 puis 50 bar), on refroidit à 30°C avec un temps d'attente, on réchauffe à 75°C par injection de vapeur. Après un nouveau temps d'attente de 5 minutes, le reste du procédé se déroule comme dans l'exemple 1 (injection d'azote, séchage par atomisation etc.).

La composition analytique du produit à l'exclusion du café est la suivante:

|  | % en poids |
|---|---|
| Matières grasses | 27,6 |
| Protéines | 11,6 |
| Lactose | 46,9 |
| Sucrose | 10,0 |
| Matières minérales | 0,9 |
| Humidité | 3,0 |

Le rapport protéines/lactose est de 1/4.

Exemple 4

(Composition lactique aromatisée)

On procède comme dans l'exemple 1 sauf que l'on ajoute une minime quantité de cannelle en poudre et de sucre vanillé.

Cette addition peut se faire de trois manières:
1. dans le concentrat avant séchage
2. avec le café soluble par la tubulure de retour des fines
3. dans le lit fluidisé de séchage après la tour

Exemple 5

(Composition lactique avec poudre de petit-lait)

Pour 100 kg de produit fini, on prend 283 kg de lait standardisé contenant 17,3 kg de matières grasses et 23,8 kg de solides non gras. On y ajoute 0,4 kg de $Na_2HPO_4$ en solution aqueuse à 10%. On dissout dans 120 kg d'eau chaude à 60°C 23,8 kg de poudre de petit-lait doux de pH au moins 6,2, 15,3 kg de lactose et 17,0 kg de sucrose. Lorsque le mélange ne présente plus de grumeaux, on l'ajoute au lait standardisé. Pour le reste, les opérations sont celles de l'exemple 1. La composition analytique du produit sans le café est la suivante:

|  | % en poids |
|---|---|
| Matières grasses | 17,5 |
| Protéines | 11,9 |
| Lactose | 46,8 |
| Sucrose | 17,0 |
| Matières minérales | 4,3 |
| Humidité | 2,5 |

Le rapport protéines/lactose est de 1/3,9.

Exemple 6

(Composition avec graisse végétale et poudre de petit-lait)

Pour obtenir 100 kg de produit fini, on prend 264 kg de lait écrémé contenant 0,2 kg de matières grasses et 23,8 kg de solides non gras. On y ajoute 0,4 kg de $Na_2HPO_4$ en solution aqueuse à 10%. On dissout dans 120 kg d'eau chaude à 60°C 23,8 kg de poudre de petit-lait doux de pH au moins 6,2, 15,3 kg de lactose et 17,0 kg de sucrose et lorsque le mélange ne présente plus de grumeaux on l'ajoute au lait standardisé. On injecte en continu dans le mélange 17,3 kg de graisse de coco préalablement chauffée à 60°C immédiatement avant de préchauffer le tout à 80°C. Le reste des opérations sont celles de l'exemple 1. La composition analytique du produit sans le café est la suivante:

|  | % en poids |
|---|---|
| Matières grasses | 17,5 |
| Protéines | 11,9 |
| Lactose | 46,8 |
| Sucrose | 17,0 |
| Matières minérales | 4,3 |
| Humidité | 2,5 |

Le rapport protéines/lactose est de 1/3,9.

## Revendications

1. Procédé de préparation d'une composition pulvérulente pour boisson moussante du type "cappucino" avec obtention d'une couche de mousse stable à la reconstitution avec de l'eau chaude comprenant essentiellement des matières grasses, des protéines, du lactose et autres hydrates de carbone, dans lequel les matières grasses, les protéines, le lactose et les autres composants en suspension ou en solution sont préchauffés, chauffés, concentrés par évaporation à un taux de matières solides de 46 à 60%, séchés par atomisation puis post-séchés, les différents composants sont présents dans des proportions telles que le rapport pondéral protéines/lactose dans la composition sèche soit compris entre 1/3,5 et 1/5 et la composition contient 0,3 à 1% d'un sel de stabilisation en poids des matières sèches, caractérisé par le fait qu'on introduit un gaz inerte sous faible pression dans le concentrat, qu'on mélange le gaz et le concentrat, qu'on comprime fortement le concentrat gazéifié et qu'on l'injecte dans une tour de séchage par l'intermédiaire d'une buse où on le sèche par pulvérisation dans un courant d'air chaud formé d'une pluralité de petits courants tourbillonnants.

2. Procédé selon la revendication 1, caractérisé par le fait que le courant d'air chaud est formé à partir d'un courant violent primaire qui est cassé à la manière d'un brise-jet en une pluralité de petits courants tourbillonnants secondaires au niveau de la buse de pulvérisation du concentrat gazéifié.

3. Procédé selon la revendication 1 ou 2, caractérisé par le fait que le gaz est introduit sous une pression de 3-4 bar, dans le concentrat directement en amont d'une pompe mélangeuse et le mélange concentrat/gaz est repris par une pompe à haute pression disposée à proximité de la pompe mélan geuse, laquelle pompe à haute pression refoule le concentrat gazéifié à une pression de 40 bar dans la buse de la tour d'atomisation.

4. Procédé selon l'une des revendications 1 à 3, caractérisé par le fait qu'on mélange du café soluble ou du succédané de café soluble avec des particules fines récupérées lors du séchage de la composition et qu'on introduit le mélange dans la tour de séchage.

5. Produit obtenu par la mise en oeuvre du procédé selon l'une des revendications 1 à 4.

## Patentansprüche

1. Verfahren zur Herstellung einer pulverförmigen Zusammensetzung für Schaumgetränke vom Typ "Cappuccino" unter Ausbildung einer stabilen Schaumschicht beim Rekonstituieren mit heiBem Wasser, welche Zusammensetzung im wesentlichen Fette, Proteine, Lactose und andere Kohlenhydrate enthält, worin die Fette, die Proteine, die Lactose und die anderen Komponenten in Suspension oder in Lösung vorerhitzt, erhitzt, durch Verdampfen auf einen Feststoffgehalt von 46 bis 60 % konzentriert, durch Zerstäuben getrocknet und dann noch nachgetrocknet werden, die verschiedenen Komponenten in solchen Mengenanteilen vorliegen, daß das Gewichtsverhältnis von Proteinen/Lactose in der trockenen Zusammensetzung zwischen 1/3,5 und 1/5 liegt und die Zusammensetzung 0,3 bis 1 Gew.-% eines Stabilisatorsalzes, bezogen auf das Gewicht der Trockensubstanz, enthält, dadurch gekennzeichnet, daß man ein Inertgas unter schwachem Druck in das Konzentrat einführt, daß man das Gas und das Konzentrat miteinander vermischt, daß man das mit dem Inertgas versetzte Konzentrat stark komprimiert und daß man dasselbe mit Hilfe einer Düse in einen Trockenturm einspritzt, wo man das mit dem Inertgas versetzte Konzentrat durch Zerstäubung in einem Warmluftstrom trocknet, welcher Warmluftstrom aus einer Mehrzahl von kleinen Wirbelströmungen gebildet wird.

2. Verfahren nach Anspruch 1, dadurch gekennzeichnet, daß der Warmluftstrom aus einem starken Primärstrom gebildet wird, der nach Art eines Wasserstrahlreglers in eine Mehrzahl von kleinen Sekundärwirbelströmungen auf dem Niveau der Zerstäubungsdüse für das mit dem Inertgas versetzte Konzentrat gebrochen wird.

3. Verfahren nach Anspruch 1 oder 2, dadurch gekennzeichnet, daß das Gas unter einem Druck von 3 bis 4 bar unmittelbar vor einer Mischpumpe in das Konzentrat eingeführt wird und daß das aus dem Konzentrat und dem Gas bestehende Gemisch von einer Hochdruckpumpe wieder aufgenommen wird, welche nahe zur Mischpumpe angeordnet ist, wobei diese Hochdruckpumpe das mit dem Inertgas versetzte Konzentrat unter einem Druck von 40 bis 80 bar in die Düse des Zerstäubungsturmes fördert.

4. Verfahren nach einem der Ansprüche 1 bis 3, dadurch gekennzeichnet, daß man löslichen Kaffee oder löslichen Kaffee-Ersatz mit Feinteilchen vermischt, die beim Trocknen der Zusammensetzung gewonnen worden sind, und daß man das Gemisch in den Trockenturm einführt.

5. Produkt, erhalten bei Durchführung des Verfahrens nach einem der Ansprüche 1 bis 4.

## Claims

1. A method making a powder-form composition for a frothy beverage of the "cappuccino" type with formation of a stable layer of froth on reconstitution with hot water, essentially comprising fats, proteins, lactose and other carbohydrates, which comprises the steps of preheating and heating the fats, proteins and other components in suspension or solution and concentrating the suspension or solution by evaporation to a solids content of 46 to 60% by weight, spray-drying and then post-drying the concentrate, the ratio by weight of proteins to lactose in the final composition being from 1:3.5 to 1:5 and the composition containing a stabilizing salt in an amount of 0.3 to 1% by weight of dry matter, characterized in that an inert gas is introduced under low pressure into the concentrate, the gas and the concentrate are mixed, the gasified concentrate is highly compressed and is then injected through a nozzle into a spray-drying tower where it is dried by spraying into a stream of hot air consisting of a plurality of turbulent component streams.

2. A method as claimed in claim 1, characterized in that the stream of hot air is formed from a vigorous primary stream by breaking it up in the manner of a jet deflector into a plurality of small turbulent secondary streams at the nozzle for spraying the gasified concentrate.

3. A method as claimed in claim 1 or 2, characterized in that the gas is injected into the concentrate under a pressure of 3 to 4 bar directly ahead of a mixing pump and the concentrate/gas mixture is taken up by a high-pressure pump which is situated near the mixing pump and which delivers the gasified concentrate under a pressure of 40 to 80 bar in the nozzle of the spray-drying tower.

4. A process as claimed in any of claims 1 to 3, characterized in that soluble coffee or soluble coffee substitute is mixed with fine particles recovered during drying of the composition and the resulting mixture is introduced into the spray drying tower.

5. The product obtained by the process claimed in any of claims 1 to 4.